# EUROPEAN PATENT APPLICATION

(11) **EP 3 366 546 A1**
(43) Date of publication of application: **29.08.2018**
(21) Application number: 18157388.2
(22) Date of filing: 19.02.2018
(51) Int. Cl.: B62D 5/00

(54) **STEERING SYSTEM AND STEERING SENSOR SYSTEM**

(30) Priority: 27.02.2017 JP 2017034551
(71) Applicant: JTEKT Corporation, Osaka-shi, Osaka 542-8502 (JP)
(72) Inventor: SAKAMAKI, Masahiko, Osaka-shi, Osaka 542-8502 (JP); IZUTANI, Keisuke, Osaka-shi, Osaka 542-8502 (JP)
(74) Representative: Winter, Brandl, Fürniss, Hübner, Röss, Kaiser, Polte - Partnerschaft mbB

(57) **Abstract**

Influence on a sensor due to leakage magnetic flux from a clutch that connects and disconnects a steering force transmission path is effectively reduced. A steering system includes a clutch (50) that is disposed in a steering force transmission path between a steering wheel (10) and steered wheels (16) and that mechanically disconnects the steering force transmission path when energized, and mechanically connects the steering force transmission path when de-energized, and a an upstream sensor (21) and a downstream sensor (22) each of which detects at least one of a steering torque and a steering angle in the steering force transmission path. At least one of the upstream sensor (21) and the downstream sensor (22) detects an energization status of the clutch (50). A detected value of at least one of the steering torque and the steering angle is corrected using a first correction value when the clutch (50) is energized, and the detected value of at least one of the steering torque and the steering angle is corrected using a second correction value different from the first correction value when the clutch (50) is de-energized.

## Description

### BACKGROUND OF THE INVENTION

### 1. Field of the Invention

The invention relates to a steering system including a clutch that connects and disconnects a steering mechanism and a steering operation mechanism, and a steering sensor system used for such a steering system.

### 2. Description of the Related Art

Steering systems for vehicles often include a clutch that connects and disconnects a steering force transmission path between a steering wheel and steered wheels. For example, in a steer-by-wire system, mechanical power transmission from a steering wheel to steered wheels is disengaged by a clutch, and a motor applies a steering operation force to the steered wheels in accordance with a steering torque that is input to the steering wheel. If a drive system including the motor fails, the clutch connects a steering force transmission path between the steering wheel and the steered wheels. Thus, the steering torque that is input to the steering wheel is mechanically transmitted to the steered wheels. Such a clutch provided in a steering system is often configured to mechanically connect and disconnect a steering force transmission path using an electromagnetic coil. In this case, leakage magnetic flux from the clutch may affect other components.

Japanese Patent Application Publication No. 3-118435 (JP 3-118435 A) discloses a power steering system including a permanent magnet field motor and a reducer that assist steering force of the steering wheel in accordance with a signal from a torque sensor. This power steering system includes an electromagnetic clutch that engages and disengages torque transmission between the permanent magnet field motor and the reducer. A magnetic shielding plate is disposed between the torque sensor and the electromagnetic clutch. The magnetic shielding plate prevents leakage magnetic flux from the electromagnetic clutch from leaking into the air on a magnetoresistance effect element side of the torque sensor.

Japanese Patent Application Publication No. 2008-216129 (JP 2008-216129 A) discloses a configuration of a torque detection device for reducing the influence of magnetic field noise. According to this torque detection device, an air gap is formed between two magnetic collecting rings that are respectively magnetically coupled to a multipolar magnet and a soft magnetic body. A Hall IC is provided for detecting a magnetic flux density of the air gap, and a correction magnetic sensor is provided at a position that avoids the air gap. The output of the Hall IC is corrected based on the output of the correction magnetic sensor.

According to the related art described above, the influence of magnetic noise on a torque sensor is reduced by shielding leakage magnetic flux using a magnetic shielding plate, or by correcting the sensor output using a correction magnetic sensor. However, in such a steering system including a clutch that connects and disconnects a power transmission path, it is sometimes difficult to sufficiently reduce the influence on a sensor due to leakage magnetic flux from the clutch by using the conventional configurations described above. Moreover, according to the conventional techniques described above, there is a need to add an element such as a magnetic shielding plate and a correction magnetic sensor.

### SUMMARY OF THE INVENTION

An object of the invention is to provide a steering system and a steering sensor system capable of effectively reducing influence on a sensor due to leakage magnetic flux from a clutch that connects and disconnects a steering force transmission path between a steering wheel and steered wheels.

A steering system according to an aspect of the invention includes: a clutch that is disposed in a steering force transmission path between a steering wheel and steered wheels, and that mechanically disconnects the steering force transmission path when the clutch is energized, and mechanically connects the steering force transmission path when the clutch is de-energized; an upstream sensor that detects at least one of a steering torque and a steering angle in the steering force transmission path between the steering wheel and the clutch; and a downstream sensor that detects at least one of a steering torque and a steering angle in the steering force transmission path between the clutch and the steered wheels. At least one of the upstream sensor and the downstream sensor detects an energization status of the clutch; and a detected value of at least one of the steering torque and the steering angle is corrected using a first correction value when the clutch is energized to mechanically disconnect the steering force transmission path, and the detected value of at least one of the steering torque and the steering angle is corrected using a second correction value different from the first correction value when the clutch is de-energized to mechanically connect the steering force transmission path.

According to the aspect described above, in a steering system including a clutch that connects and disconnects a steering force transmission path between a steering wheel and steered wheels, influence on a sensor due to leakage magnetic flux from the clutch can be effectively reduced.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 illustrates an exemplary configuration of a steering system according to an embodiment;
FIG. 2 is a cross-sectional view illustrating an exemplary configuration of a clutch 50;
FIG. 3 is a block diagram illustrating an exemplary configuration of a steering sensor system according to the embodiment;
FIG. 4 is a flowchart illustrating an example of an initial setting process for a first correction value and a second correction value; and
FIG. 5 is a flowchart illustrating an example of a correction process that switches between correction values in accordance with the energization status of the clutch 50.

### DETAILED DESCRIPTION OF EMBODIMENTS

### (First Configuration)

A steering system according to a first configuration of an embodiment of the invention includes: a clutch that is disposed in a steering force transmission path between a steering wheel and steered wheels, and that mechanically disconnects the steering force transmission path when the clutch is energized, and mechanically connects the steering force transmission path when the clutch is de-energized; an upstream sensor that detects at least one of a steering torque and a steering angle in the steering force transmission path between the steering wheel and the clutch; and a downstream sensor that detects at least one of a steering torque and a steering angle in the steering force transmission path between the clutch and the steered wheels. At least one of the upstream sensor and the downstream sensor detects an energization status of the clutch; and a detected value of at least one of the steering torque and the steering angle is corrected using a first correction value when the clutch is energized to mechanically disconnect the steering force transmission path, and the detected value of at least one of the steering torque and the steering angle is corrected using a second correction value different from the first correction value when the clutch is de-energized to mechanically connect the steering force transmission path.

All of the clutch, the upper sensor, and the downstream sensor are disposed in the steering force transmission path between the steering wheel and the steered wheels. Therefore, the distance between the clutch and each of the upper sensor and the downstream sensor is small. As a result, the upstream sensor and the downstream sensor are easily affected by leakage magnetic flux from the clutch. According to the first configuration described above, the correction value used for correcting the detection value of the downstream sensor or the upstream sensor when the clutch is energized to mechanically disconnect the steering force transmission path is different from that used when the clutch is de-energized to mechanically connect the steering force transmission path. Therefore, it is possible to effectively reduce influence on the detected value of the sensor due to leakage magnetic flux that changes depending on whether the clutch is energized or de-energized. Further, it is possible to reduce influence on the sensor due to leakage magnetic flux from the clutch, without adding an element such as a magnetic shielding plate and a correction magnetic sensor, for example.

### (Second Configuration)

In the first configuration described above, the first correction value may vary with temperature, and the second correction value may vary with temperature. Thus, a change in the detected value of the sensor due to the temperature can be compensated for by the first correction value and the second correction value.

### (Third Configuration)

In the first or second configuration described above, the first correction value and the second correction value may vary with a relative position of the upstream sensor to the clutch when the first correction value and the second correction value are used in the upstream sensor; and the first correction value and the second correction value may vary with a relative position of the downstream sensor to the clutch when the first correction value and the second correction value are used in the downstream sensor. Thus, it is possible to make a more appropriate correction in accordance with the relative positions of the clutch and the sensor.

### (Fourth Configuration)

A steering sensor system according to a fourth configuration of the embodiment of the invention includes a clutch energization detection circuit, a sensor, and a correction circuit. The clutch energization detection circuit detects whether a clutch is energized or de-energized. The clutch is disposed in a steering force transmission path between a steering wheel and steered wheels. The clutch mechanically disconnects the steering force transmission path when the clutch is energized, and mechanically connects the steering force transmission path when the clutch is de-energized. The sensor detects at least one of a steering torque and a steering angle in the steering force transmission path between the steering wheel and the clutch, or detects at least one of a steering torque and a steering angle in the steering force transmission path between the clutch and the steered wheels. The correction circuit corrects a detected value of at least one of the steering torque and the steering angle using a first correction value when the clutch energization detection circuit detects that the clutch is energized to mechanically disconnect the steering force transmission path, and corrects the detected value of at least one of the steering torque and the steering angle using a second correction value different from the first correction value when the clutch energization detection circuit detects that the clutch is de-energized to mechanically connect the steering force transmission path.

According to the fourth configuration, the correction value used for correcting the detection value of the sensor when the clutch is energized to mechanically disconnect the steering force transmission path is different from that used when the clutch is de-energized to mechanically connect the steering force transmission path. Therefore, it is possible to effectively reduce influence on the detected value of the sensor due to leakage magnetic flux that changes depending on whether the clutch is energized or de-energized.

The sensor or the upstream sensor and the downstream sensor according to any one of the first configuration to the fourth configuration may be configured to, for example, detect the steering torque or the steering angle, by detecting a magnetic field that changes with rotation about the axis or linear motion in the axial direction of a shaft that transmits the steering force, in the steering force transmission path. The sensor or the upstream sensor and the downstream sensor described above may have a magnetic detection mechanism such as a Hall IC and an MR element, for example.

The steering system according to any one of the first to third configurations may include, for example, a first steering mechanism that transmits the steering force in the steering force transmission path between the steering wheel and the clutch, and a second steering mechanism that transmits the steering force in the steering force transmission path between the clutch and the steered wheels. The first steering mechanism may include, for example, a steering shaft that rotates with rotation of the steering wheel. The second steering mechanism may include, for example, a connecting shaft connected to the steering shaft via the clutch, and a steered bar that linearly moves in the axial direction thereof with rotation of the connecting shaft, and thereby transmits the steering force to the steered wheels. In this case, the clutch switches between mechanical connection and disconnection between the steering shaft and the connecting shaft. That is, the clutch mechanically connects and disconnects the first steering mechanism and the second steering mechanism.

The clutch is energized when power is supplied to the clutch. The clutch is de-energized when power is not supplied to the clutch.

The clutch may be, for example, an electromagnetic clutch. In this case, the electromagnetic clutch includes an electromagnetic coil. The electromagnetic clutch is configured to disconnect the steering force transmission path by a force generated by energization of the electromagnetic coil, and connect the steering force transmission path when the electromagnetic coil is de-energized. That is, the steering force transmission path is disconnected by the electromagnetic clutch when the electromagnetic coil is excited, and the steering force transmission path is connected by the electromagnetic clutch when the electromagnetic coil is not excited.

In one example, the clutch may be configured to include an electromagnetic coil and a moving member that is moved by a force generated by energization of the electromagnetic coil. In this case, when the electromagnetic coil is energized, that is, excited, the moving member is located at a position for disconnecting, that is, decoupling the steering shaft of the first steering mechanism from the connecting shaft of the second steering mechanism. When the electromagnetic coil is de-energized, that is, not excited, the moving member is located at a position for connecting, that is, coupling the steering shaft of the first steering mechanism and the connecting shaft of the second steering mechanism.

The steering system according to any one of the first to third configuration may be a steer-by-wire steering system. In this case, for example, the first steering mechanism may include a first actuator that applies a steering force corresponding to the steering torque detected by the upstream sensor to the steering shaft. The second steering mechanism may include a second actuator (drive mechanism) that steers the steered wheels in accordance with the steering torque detected by the upstream sensor.

The embodiment of the invention will be described with reference to the drawings. The same or corresponding elements are denoted by the same reference numerals throughout the drawings, and a repetitive description will be omitted. For ease of explanation, the elements in the drawings may be illustrated in a simplified or schematic manner, and some elements may not be illustrated.

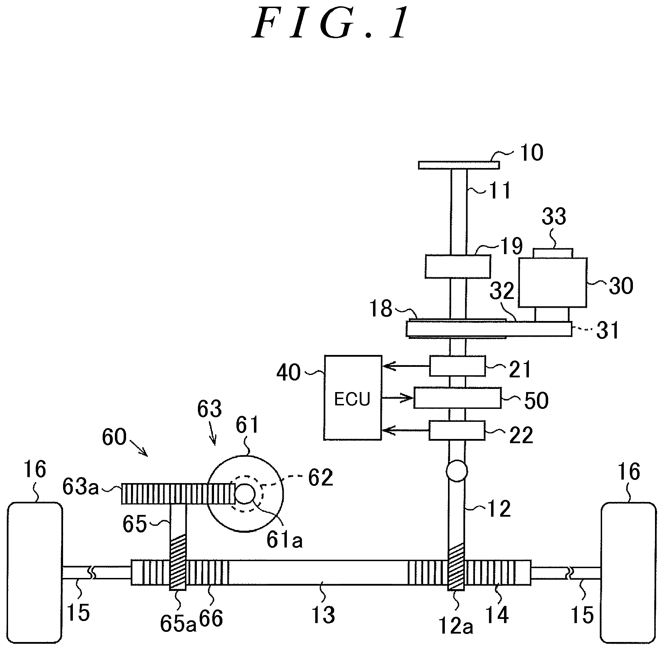

FIG. 1 illustrates an exemplary configuration of a steering system according to the embodiment. The steering system includes a steering shaft 11 connected to a steering wheel 10, a connecting shaft 12 that is rotatable coaxially with the steering shaft 11, and a clutch 50. The clutch 50 mechanically connects and disconnects the steering shaft 11 and the connecting shaft 12. The steering system further includes a steered bar 13 that transmits a steering operation force to steered wheels 16. The steered bar 13 linearly moves in the axial direction thereof with rotation of the connecting shaft 12, and thereby transmits the steering operation force to the steered wheels 16. The steered bar 13 may be referred to as a rack shaft.

The steering shaft 11 is included in the steering force transmission path from the steering wheel 10 to the clutch 50. The connecting shaft 12 and the steered bar 13 are included in the steering force transmission path from the clutch 50 to the steered wheels 16. In other words, the steering system includes a first steering mechanism that transmits the steering force on the steering wheel 10 side with respect to the clutch 50, and a second steering mechanism that transmits the steering force on the steered wheels 16 side with respect to the clutch 50. The first steering mechanism includes the steering shaft 11. The second steering mechanism includes the connecting shaft 12 and the steered bar 13. The clutch 50 mechanically connects and disconnects the first steering mechanism and the second steering mechanism. The clutch 50 engages and disengages transmission of the steering torque. Note that the first steering mechanism may be referred to as a steering mechanism, and the second steering mechanism may be referred to as a steering operation mechanism.

In the example of FIG. 1, the connecting shaft 12 is provided with a pinion gear 12a. The steered bar 13 is provided with a rack gear 14. The pinion gear 12a meshes with the rack gear 14. The rotary motion of the connecting shaft 12 is converted into reciprocating linear motion of the steered bar 13 in the axial direction thereof via the pinion gear 12a and the rack gear 14. Tie rods 15 are connected to the opposite ends of the steered bar 13. The reciprocating linear motion of the steered bar 13 is transmitted to the right and left steered wheels 16 via the tie rods 15. Thus, the steered angle of the steered wheels 16 is changed.

FIG. 1 illustrates an example in which the steering system is a steer-by-wire steering system. The steering system includes a first motor 30 that applies a steering force to the steering shaft 11. The steering system further includes a drive mechanism 60 that steers the steered wheels 16 in accordance with steering by the driver.

A first pulley 31 is fixed to the rotary shaft of the first motor 30. Teeth are provided at regular intervals on the periphery of the first pulley 31. A second pulley 18 is fixed in the middle of the steering shaft 11. Teeth are provided at regular intervals on the periphery of the second pulley 18. A belt 32 extends around the first pulley 31 and the second pulley 18. The first pulley 31, the second pulley 18, and the belt 32 serve as a reducer. The drive force of the first motor 30 is applied to the steering shaft 11 via the reducer. In the steering force transmission path on the steering wheel 10 side with respect to the clutch 50, the first motor 30 applies a steering reaction force as a reaction force against rotation of the steering wheel 10. That is, the first motor 30 is a reaction force motor.

The drive mechanism 60 includes a steering operation motor 61 as the source of a steering operation force, a reducer (for example, a worm reducer) 63 that reduces the rotational speed of the steering operation motor 61, and a drive shaft 65. The reducer 63 includes a worm 61 a provided on the rotary shaft of the steering operation motor 61, and a worm wheel 63a with which the worm 61a meshes. The drive shaft 65 is fixed to the worm wheel 63a. The drive shaft 65 includes a second pinion gear 65a that meshes with a second rack gear 66 provided on the steered bar 13. The rotary motion of the drive shaft 65 is converted into reciprocating linear motion of the steered bar 13 in the axial direction thereof via the second pinion gear 65a and the second rack gear 66. Note that the drive mechanism 60 constitutes a part of the second steering mechanism (the steering operation mechanism), together with the connecting shaft 12, the steered bar 13, and the rack gear 14. The steering force transmission path of the reducer 63 and the drive shaft 65 is regarded as also being included in the steering force transmission path between the steering wheel 10 and the steered wheels 16.

### (Exemplary Configuration of Sensor)

The steering system includes an upstream sensor 21 and a downstream sensor 22. The upstream sensor 21 detects at least one of a steering torque and a steering angle in the steering force transmission path between the steering wheel 10 and the clutch 50. That is, the upstream sensor 21 detects at least one of a steering torque and a steering angle of the first steering mechanism (the steering mechanism). The downstream sensor 22 detects at least one of a steering torque and a steering angle in the steering force transmission path between the clutch 50 and the steered wheels 16. That is, the downstream sensor 22 detects at least one of a steering torque and a steering angle of the second steering mechanism (the steering operation mechanism).

Each of the upstream sensor 21 and the downstream sensor 22 may include, for example, a torque sensor. The torque sensor of the upstream sensor 21 detects a running torque of the steering shaft 11. The torque sensor of the downstream sensor 22 detects a running torque of the connecting shaft 12. The torque sensor of the downstream sensor 22 may be configured to detect a running torque of the drive shaft 65 or a force in the axial direction of the steered bar 13. A magnetic body is disposed on a shaft (any of the steering shaft 11, the connecting shaft 12, the drive shaft 65, and the steered bar 13) on which the upstream sensor 21 and the downstream sensor 22 are provided. The magnetic body is disposed such that the magnetic field varies when a force (torque) for rotating the shaft or a force for linearly moving the shaft in the axial direction is generated. The torque sensors of the upstream sensor 21 and the downstream sensor 22 detect a steering torque by detecting a change in the magnetic field, that is, magnetic flux density. A change in the magnetic field can be detected using, for example, a detection coil, a Hall IC, an MR element, or the like.

In one example, a part of the shaft on which the upstream sensor 21 and the downstream sensor 22 are disposed may be configured to include a first shaft and a second shaft that are coaxially and relatively rotatably coupled via a connecting bar (torsion bar). A magnetic body is disposed on at least one of the first shaft and the second shaft such that the magnetic flux changes when the connecting bar is twisted by rotation of the second shaft relative to the first shaft. The torque sensors of the upstream sensor 21 and the downstream sensor 22 can detect torque for rotating the first shaft and the second shaft, by detecting a change in the magnetic flux caused by rotation of the second shaft relative to the first shaft.

Alternatively, a part of the shaft on which the upstream sensor 21 and the downstream sensor 22 are disposed may be formed of a magnetostrictive material having a magnetostrictive effect. In this case, the magnetic field changes when the force for rotating the shaft or the force in the axial direction of the shaft is applied. The torque sensors of the upstream sensor 21 and the downstream sensor 22 can detect a torque of the shaft by detecting a change in the magnetic field using a detection coil.

Each of the upstream sensor 21 and the downstream sensor 22 may include, for example, a steering angle sensor. The steering angle sensor may be, for example, a sensor that detects a rotation angle of any of the steering shaft 11, the connecting shaft 12, and the drive shaft 65, or an amount of axial movement of the steered bar 13. The steering angle sensor may be configured to, for example, detect a steering angle by detecting magnetic flux that changes with rotation of the shaft or axial movement of the shaft.

In one example, a part of the shaft on which the steering angle sensor is disposed may include a center gear that rotates with the shaft, and two outer gears that mesh with the center gear. A magnetic body is disposed on at least one of the two outer gears such that the magnetic flux changes when the two outer gears rotate. The steering angle sensor detects a change in the magnetic flux caused by rotation of the two outer gears. The rotation angle of the center gear, that is, the rotation angle of the shaft is calculated based on the change in the magnetic flux.

Alternatively, the steering angle sensor may be configured to detect a steering angle, based on the torque of the shaft detected by the torque sensor and the output value of the drive source (the first motor 30 or the steering operation motor 61) that applies a torque to the shaft. Note that at least one of the upstream sensor 21 and the downstream sensor 22 may be an integrated sensor that detects both a steering torque and a steering angle.

### (Exemplary Configuration of Clutch)

The clutch 50 is an electromagnetic clutch. The clutch 50 includes an electromagnetic coil. The clutch 50 disconnects the steering force transmission path by a force generated by energization of the electromagnetic coil, and connects the steering force transmission path when the electromagnetic coil is de-energized. That is, the steering force transmission path is disconnected by the clutch 50 when the electromagnetic coil is excited, and the steering force transmission path is connected by the clutch 50 when the electromagnetic coil is not excited.

For example, the clutch 50 may be configured to include an electromagnetic coil, a moving member that is moved by a force generated by energization of the electromagnetic coil, and a biasing member that biases the moving member in a direction opposite to the direction of the force generated by energization of the electromagnetic coil. In this case, when the electromagnetic coil is excited, the moving member is moved to a position for disconnecting the steering shaft 11 from the connecting shaft 12, by a force generated in the electromagnetic coil. When the electromagnetic coil is not excited, the moving member is pushed by the biasing member and is located at a position for connecting the steering shaft 11 and the connecting shaft 12.

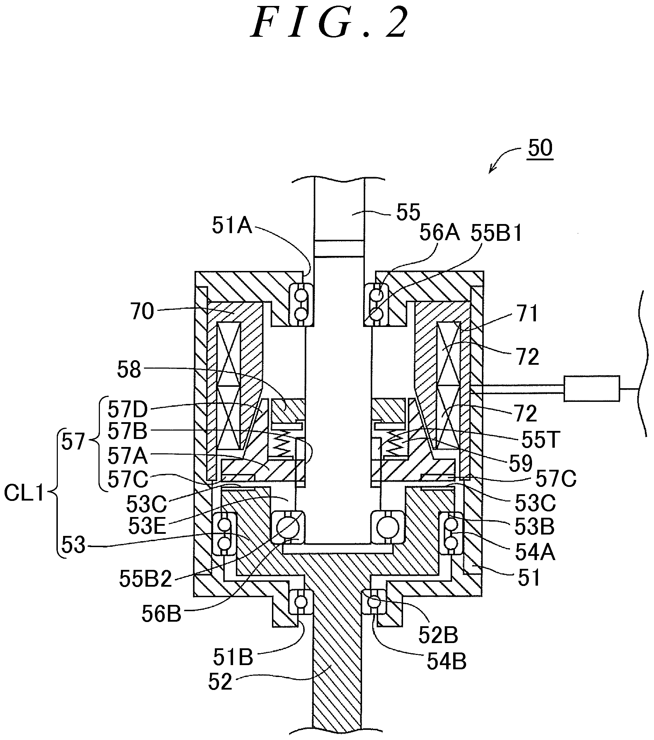

FIG. 2 is a cross-sectional view illustrating an exemplary configuration of the clutch 50. In the example of FIG. 2, the clutch 50 includes a housing 51. The housing 51 has a first opening 51A and a second opening 51B formed at positions facing each other. An input shaft 55 is inserted in the first opening 51A. An output shaft 52 is inserted in the second opening 51B. The input shaft 55 and the output shaft 52 are disposed coaxially. A first clutch body 57 is attached to the end of the input shaft 55 in the housing 51. A second clutch body 53 is integrally formed at the end of the output shaft 52 in the housing 51. The first clutch body 57 and the second clutch body 53 face each other in the axial direction of the input shaft 55 and the output shaft 52.

The input shaft 55 is connected to the steering shaft 11. That is, the input shaft 55 rotates with rotation of the steering shaft 11. The output shaft 52 is connected to the connecting shaft 12. That is, the output shaft 52 rotates with rotation of the connecting shaft 12.

A guide projection 55T extending in the axial direction is formed on the outer peripheral surface of the end of the input shaft 55, and a guide groove (not illustrated) that meshes with the guide projection 55T is formed in the inner peripheral surface of the first clutch body 57. Accordingly, the first clutch body 57 is not rotatable about the input shaft 55, but is linearly movable in the axial direction with respect to the input shaft 55. The first clutch body 57 is an example of a moving member. The first clutch body 57 is, for example, a magnetic body.

The first clutch body 57 includes a plate 57A having a flat ring shape. The input shaft 55 extends through a center hole 57B of the plate 57A. The surface of the plate 57A facing the second clutch body 53 has a meshing face 57C. The meshing face 57C has a plurality of projections extending radially about the input shaft 55, for example.

The second clutch body 53 at the end of the output shaft 52 has a greater diameter than the output shaft 52. The end face of the second clutch body 53 has a meshing face 53C at a position facing the meshing face 57C. The meshing face 53C has a plurality of projections extending radially about the output shaft 52, for example.

The outer peripheral surface of the second clutch body 53 is supported on the inner peripheral surface of the housing 51 via a bearing fitting portion 53B and a bearing 54A. The outer peripheral surface of the output shaft 52 is supported at the second opening 51B of the housing 51, via a bearing fitting portion 52B and a bearing 54B. Thus, the output shaft 52 and the second clutch body 53 are rotatable relative to the housing 51.

The end of the input shaft 55 is inserted in a bearing recess 53E formed at the center of the second clutch body 53. The outer peripheral surface of the end of the input shaft 55 inserted in the bearing recess 53E is supported on the inner peripheral surface of the bearing recess 53E, via a bearing fitting portion 55B2 and a bearing 56B. The outer peripheral surface of a portion of the input shaft 55 located inside the first opening 51A is supported on the inner peripheral surface of the first opening 51A via a bearing fitting portion 55B1 and a bearing 56A. Thus, the input shaft 55 is rotatable relative to the housing 51, and the input shaft 55 and the output shaft 52 are rotatable relative to each other.

A cylindrical wall 57D surrounding the peripheral surface of the input shaft 55 is formed on the surface of the plate 57A of the first clutch body 57 opposite to the meshing face 57C. The cylindrical wall 57D extends from the plate 57A in the axial direction of the input shaft 55. The cylindrical wall 57D has an inner diameter that is constant in the axial direction of the input shaft 55, and has an outer diameter that decreases in the direction away from the plate 57A.

A base board 58 is fixed to the input shaft 55. The base board 58 has the shape of a flat ring. The plate 57A of the first clutch body 57 is disposed between the base board 58 and the second clutch body 53. The base board 58 is disposed on the inner side of the cylindrical wall 57D of the first clutch body 57. A plurality of coil springs 59 are accommodated in an annular space surrounded by the input shaft 55, the plate 57A, the cylindrical wall 57D, and the base board 58. The coil springs 59 are an example of a biasing member.

Each of the coil springs 59 is fixed at one end to the base board 58, and is fixed at the other end to the plate 57A. The first clutch body 57 is pushed in the direction away from the base board 58, that is, toward the second clutch body 53, by the biasing force of the coil springs 59.

An annular yoke 70 is fixed to a portion of the inner peripheral surface of the housing 51 on the first opening 51A side with respect to the plate 57A. A first-clutch-body-57-side end of the yoke 70 faces the cylindrical wall 57D of the first clutch body 57. The inner diameter of a portion of the yoke 70 facing the cylindrical wall 57D increases toward the plate 57A along the outer peripheral surface of the cylindrical wall 57D.

The yoke 70 has an annular groove 71 that is open toward the plate 57A of the first clutch body 57. An electromagnetic coil 72 is accommodated in the annular groove 71. When power is supplied to the electromagnetic coil 72 from a power source (not illustrated), the electromagnetic coil 72 is energized (excited). When the electromagnetic coil 72 is energized, the first clutch body 57 moves toward the yoke 70 while compressing the coil springs 59. As a result, the first clutch body 57 is spaced apart from the second clutch body 53 (the state illustrated in FIG. 2). Thus, the input shaft 55 and the output shaft 52 can rotate relative to each other. That is, a steering force cannot be transmitted from the steering shaft 11 to the connecting shaft 12. Accordingly, the steering force transmission path between the steering wheel 10 and the steered wheels 16 is mechanically disconnected by the clutch 50. That is, the first steering mechanism and the second steering mechanism are mechanically disconnected by the clutch 50.

When the electromagnetic coil 72 is de-energized, the first clutch body 57 is pushed toward the second clutch body 53 by the elastic force of the coil springs 59. As a result, the meshing face 53C of the second clutch body 53 meshes with the meshing face 57C of the first clutch body 57. Thus, the input shaft 55 and the output shaft 52 can rotate together. That is, a steering force can be transmitted from the steering shaft 11 to the connecting shaft 12. Accordingly, the steering force transmission path between the steering wheel 10 and the steered wheels 16 is mechanically connected by the clutch 50. The first steering mechanism and the second steering mechanism are mechanically connected (coupled) by the clutch 50.

Referring back to FIG. 1, an ECU 40 controls energization and de-energization of the clutch 50. Detection signals of the upstream sensor 21 and the downstream sensor 22 are introduced into the ECU 40. The ECU 40 calculates the target steered angle and the reaction force of the steered wheels 16, based on the detection signals of the upstream sensor 21 and the downstream sensor 22. The ECU 40 applies a current based on the calculation result to the steering operation motor 61 and the first motor 30.

When the steering system enables the steer-by-wire function, the ECU 40 energizes the clutch 50 to disconnect the steering force transmission path between the steering wheel 10 and the steered wheels 16. The ECU 40 drives the first motor 30 in accordance with at least one of a change in the steering torque or a change in the steering angle caused by an operation by the driver, and thereby applies a steering reaction force to the steering shaft 11. The ECU 40 also drives the steering operation motor 61 in accordance with at least one of a change in the steering torque or a change in the steering angle caused by an operation by the driver, and thereby steers the steered wheels 16.

The ECU 40 de-energizes the clutch 50 and connects the steering force transmission path between the steering wheel 10 and the steered wheels 16, for example, when a failure of the drive mechanism 60 is detected, or when disabling the steer-by-wire function in the steering system. In this case, the driver can steer the steered wheels 16 by operating the steering wheel 10.

Further, for example, in the case where steering of the steered wheels 16 cannot be controlled by the ECU 40, the clutch 50 mechanically connects the steering force transmission path between the steering wheel 10 and the steered wheels 16. That is, the steer-by-wire system has a fail-safe function that enables steering by transmitting the steering force from the steering wheel 10 to the steered wheels 16 even when the ECU 40 fails.

### (Exemplary Configuration of Steering Sensor System)

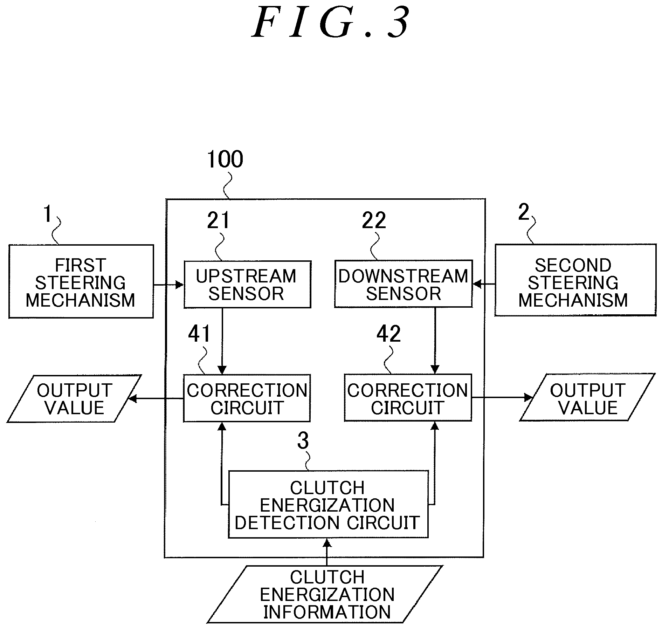

FIG. 3 is a block diagram illustrating an exemplary configuration of a steering sensor system according to the embodiment. In the example of FIG. 3, a steering sensor system 100 includes the upstream sensor 21, the downstream sensor 22, a clutch energization detection circuit 3, and correction circuits 41 and 42.

The clutch energization detection circuit 3 detects whether the clutch 50 is energized to mechanically disconnect the steering force transmission path, or de-energized to mechanically connect the steering force transmission path. The clutch energization detection circuit 3 can detect whether the clutch 50 is energized or de-energized, by detecting at least one of a current or a voltage of the electromagnetic coil of the clutch 50. Alternatively, the clutch energization detection circuit 3 may detect whether the clutch 50 is energized or de-energized, by detecting mechanical connection and disconnection of the steering force transmission path at the clutch 50.

In another example, the clutch energization detection circuit 3 may detect whether the clutch 50 is energized or de-energized, by monitoring a signal or data that controls the clutch 50 in the ECU 40. Alternatively, the clutch energization detection circuit 3 may detect whether the clutch 50 is energized or de-energized, by detecting the state of a battery that supplies power to the clutch 50, or at least one of a current and a voltage of a power supply line between the battery and the clutch 50.

As mentioned above, the upstream sensor 21 detects at least one of a steering torque and a steering angle in the first steering mechanism 1 that configures the steering force transmission path between the steering wheel 10 and the clutch 50. The downstream sensor 22 detects at least one of a steering torque and a steering angle in the second steering mechanism 2 that configures the steering force transmission path between the clutch 50 and the steered wheels 16.

When the clutch energization detection circuit 3 detects that the clutch 50 is energized to mechanically disconnect the steering force transmission path, the correction circuit 41 corrects the detection value of at least one of the steering torque and the steering angle detected by the upstream sensor 21 using a first correction value. On the other hand, when the clutch energization detection circuit 3 detects that the clutch 50 is de-energized to mechanically connect the steering force transmission path, the correction circuit 41 corrects the detection value of at least one of the steering torque and the steering angle detected by the upstream sensor 21 using a second correction value different from the first correction value.

When the clutch energization detection circuit 3 detects that the clutch 50 is energized to mechanically disconnect the steering force transmission path, the correction circuit 42 corrects the detection value of at least one of the steering torque and the steering angle detected by the downstream sensor 22 using the first correction value. On the other hand, when the clutch energization detection circuit 3 detects that the clutch 50 is de-energized to mechanically connect the steering force transmission path, the correction circuit 42 corrects the detection value of at least one of the steering torque and the steering angle detected by the downstream sensor 22 using the second correction value different from the first correction value.

For example, the first correction value and the second correction value are stored in advance in a storage device, such as a memory, included in the steering sensor system 100. The correction circuits 41 and 42 perform a correction by performing arithmetic processing using the first correction value or the second correction value that is stored in advance, on the detection values of the upstream sensor 21 and the downstream sensor 22. For example, a corrected output value can be calculated by substituting the detection value of the upstream sensor 21 or the downstream sensor 22 into a predetermined equation using the first correction value or a predetermined equation using the second correction value.

In one example, the first correction value and the second correction value may be offset correction values. In this case, the correction circuit 41 calculates the output value by subtracting the first correction value or the second correction value from the detection value of the upstream sensor 21. The correction circuit 42 calculates the output value by subtracting the first correction value or the second correction value from the detection value of the downstream sensor 22. Alternatively, the first correction value and the second correction value may be gain correction values. In this case, the correction circuit 41 calculates the output value by multiplying the detection value of the upstream sensor 21 by the first correction value or the second correction value. The correction circuit 42 calculates the output value by multiplying the detection value of the downstream sensor 22 by the first correction value or the second correction value. The correction circuits 41 and 42 may perform a correction by combining an operation of adding the first correction value to or subtracting the first correction value from the detection value and an operation of multiplying or dividing the detection value by the first correction value. Similarly, the correction circuits 41 and 42 may perform a correction by combining an operation of adding the second correction value to or subtracting the second correction value from the detection value and an operation of multiplying or dividing the detection value by the second correction value. Note that in the correction operation of the correction circuits 41 and 42, other correction values may be used in addition to the first correction value and the second correction value.

Each of the first correction value and the second correction value may be a plurality of values. For example, correspondence data (for example, a table or a map) indicating a first correction value and a second correction value corresponding to each of the plurality of detection values may be stored in advance. In this case, the correction circuits 41 and 42 can determine the first correction value and the second correction value corresponding to the detection value of the upstream sensor 21 or the detection value of the downstream sensor 22 by referring to the correspondence data.

The clutch energization detection circuit 3 and the correction circuits 41 and 42 may be configured as a part of the ECU 40, for example. That is, the ECU 40 can serve as the clutch energization detection circuit 3, by executing a predetermined program to obtain clutch energization information and determine whether the clutch 50 is energized or de-energized. The ECU 40 can serve also as the correction circuits 41 and 42, by executing a predetermined program to correct the detection values of the upstream sensor 21 and the downstream sensor 22 based on the detection result of the clutch energization detection circuit 3.

Alternatively, at least a part of the functions of the clutch energization detection circuit 3 and the correction circuits 41 and 42 may be implemented by a circuit or a processor embedded in the upstream sensor 21 or the downstream sensor 22.

The first correction value and the second correction value may vary with temperature. In this case, the correction circuits 41 and 42 obtain the temperature from an in-vehicle temperature sensor (not illustrated). The correction circuits 41 and 42 determine the first correction value and the second correction value in accordance with temperature. The correction circuits 41 and 42 can determine the first correction value and the second correction value corresponding to the temperature obtained from the temperature sensor by, for example, referring to data that is stored in advance indicating the correspondence between temperature and the first correction value and data that is stored in advance indicating the correspondence between temperature and the second correction value. Alternatively, the correction circuits 41 and 42 may correct the detection value of the upstream sensor 21 or the detection value of the downstream sensor 22, using the correction value based on the temperature, in addition to the second correction value. The correction circuits 41 and 42 may correct the detection value of the upstream sensor 21 or the detection value of the downstream sensor 22, using the correction value based on the temperature, in addition to the first correction value.

The first correction value and the second correction value may vary with the relative position of the upstream sensor 21 to the clutch 50 when the first correction value and the second correction value are used in the upstream sensor 21. Also, the first correction value and the second correction value may vary with the relative position of the downstream sensor 22 to the clutch 50 when the first correction value and the second correction value are used in the downstream sensor 22.

For example, the first correction value and the second correction value can be stored in a storage device of the steering sensor system 100, by making initial setting of the first correction value and the second correction value, on the production line of the steering system or at a repair shop. In the initial setting, the first correction value and the second correction value corresponding to the relative position of the upstream sensor 21 to the clutch 50 may be determined as the correction values for the upstream sensor 21 and be stored in the storage device. Similarly, on the production line of the steering system or at a repair shop, the first correction value and the second correction value corresponding to the relative position of the downstream sensor 22 to the clutch 50 may be determined as the correction values for the downstream sensor 22 and be stored in the storage device.

In the case where the relative position of the upstream sensor 21 to the clutch 50 and the relative position of the downstream sensor 22 to the clutch 50 are variable, the correction circuits 41 and 42 can determine the first correction value and the second correction value to be used for correction processing in accordance with the relative positions. The relative position may be, for example, the distance between a clutch and a sensor. The distance between a clutch and a member (a column, a housing, or the like) supporting the sensor may be regarded as the distance between the clutch and the sensor.

### (Exemplary Operation of Steering Sensor System)

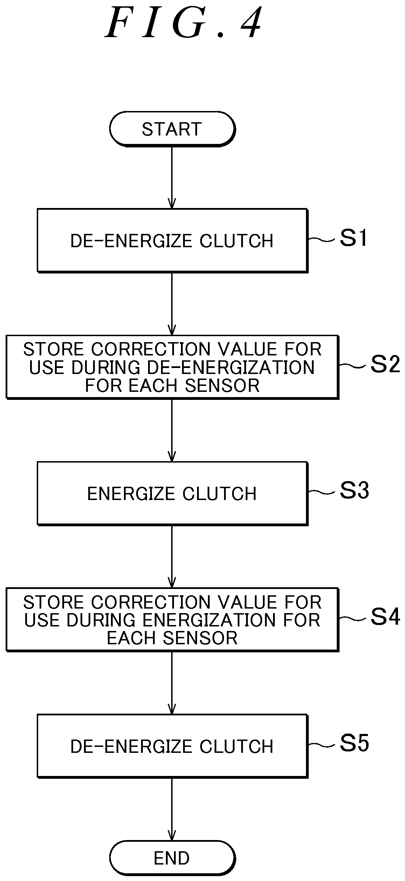

FIG. 4 is a flowchart illustrating an example of an initial setting process for the first correction value and the second correction value. First, the steering system is placed in a state in which the clutch 50 is de-energized and the steering force transmission path is connected (S1). In this state, known steering torque and steering angle (known input values) are input to each of the first steering mechanism and the second steering mechanism to obtain the output values of the upstream sensor and the downstream sensor. Based on the comparison result between the obtained output values and the known input values, the first correction value is determined. The determined first correction value is stored as the initial setting value in the storage device of the steering sensor system 100 (S2).

The steering system is placed in a state in which the clutch 50 is energized and the steering force transmission path is disconnected (S3). In this state, known steering torque and steering angle (known input values) are input to each of the first steering mechanism and the second steering mechanism to obtain the output values of the upstream sensor and the downstream sensor. Based on the comparison result between the obtained output values and the known input values, the second correction value is determined. The determined second correction value is stored as the initial setting value in the storage device of the steering sensor system 100 (S4). Subsequently, the clutch 50 is de-energized (S5).

In this manner, initial setting of the first correction value and the second correction value is made. This initial setting can be made, for example, on a production line of the steering system or at a repair shop.

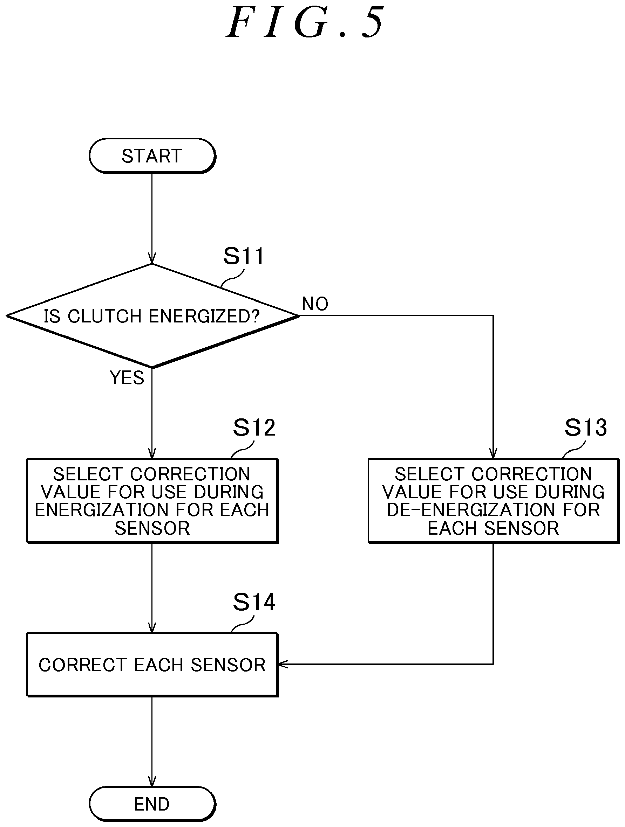

FIG. 5 is a flowchart illustrating an example of a correction process that switches between correction values in accordance with the energization status of the clutch 50. In the example of FIG. 5, the clutch energization detection circuit 3 determines whether the clutch 50 is energized (S11). If the clutch energization detection circuit 3 determines that the clutch 50 is energized (YES in S11), the correction circuits 41 and 42 select the first correction value for use during energization for each of the sensors 21 and 22 as the correction value (S12). More specifically, a first correction value Tofs_on for use during energization is selected as the correction value of the steering torque for the upstream sensor 21 and the downstream sensor 22. A first correction value θofs_on for use during energization is selected as the correction value of the steering angle for the upstream sensor 21 and the downstream sensor 22.

If the clutch energization detection circuit 3 determines that the clutch 50 is de-energized (NO in S11), the correction circuits 41 and 42 select the second correction value for use during de-energization for each of the sensors 21 and 22 as the correction value (S13). More specifically, a second correction value Tofs_off for use during de-energization is selected as the correction value of the steering torque for the upstream sensor 21 and the downstream sensor 22. A second correction value θofs_ off for use during de-energization is selected as the correction value of the steering angle for the upstream sensor 21 and the downstream sensor 22.

The correction circuits 41 and 42 correct a detection value Td of the steering torque and a detection value θd of the steering angle of the upstream sensor 21, and a detection value Td of the steering torque and a detection value θd of the steering angle of the downstream sensor 22, using the correction values selected in S12 or S13. For example, the correction circuits 41 and 42 calculate an output value by subtracting a correction value from a detection value. In this case, output values Tc of the steering torque and output values θc of the steering angle during energization and during de-energization are calculated by the following equations (1) to (4).
Steering Torque during Energization of Clutch: Tc=Td - Tofs_off (1)
Steering Torque during De-energization of Clutch: Tc = Td - Tofs_on (2)
Steering Angle during Energization of Clutch: θc = θd - θofs_off (3)
Steering Angle during De-energization of Clutch: θc = θd - θofs_on (4)

In the above example, the second correction values Tofs_on and θofs_on for use during de-energization of the clutch may be greater than the first correction values Tofs_off and θofs_off for use during energization of the clutch (Tofs_off <Tofs_on, θofs_off < θofs_on), for example.

With the process illustrated in FIG. 5, leakage magnetic flux changes depending on whether the electromagnetic coil of the clutch is energized or de-energized, so that the correction value of the sensor can be appropriately set. Note that, in the process of determining the correction values in S12 and S13, the correction circuits 41 and 42 may determine the first correction values Tofs_on and θofs_on or the second correction values Tofs_off and θofs_off in accordance with the temperature (Temp) obtained by the temperature sensor at that time. In this case, the first correction values Tofs_on and θofs_on can be determined, using a function of temperature and the first correction value or data (a table or a map) indicating the correspondence between temperature and the first correction value that is stored in advance. Similarly, the second correction values Tofs_off and θofs_off can be determined, using a function of temperature and the second correction value or data indicating the correspondence between temperature and the second correction value.

### (Modifications)

Although the embodiment of the invention has been descried above, the invention is not limited to thereto. For example, at least one of the steering shaft 11, the connecting shaft 12, and the drive shaft 65 may include a plurality of shafts that are serially connected to each other. Further, the steering force transmission path between the steering wheel 10 and the steered wheels 16 may include other members than those described in the above embodiments.

The upstream sensor and the downstream sensor are not limited to those configured to detect a change in the magnetic field as in the example described above. The upstream sensor and the downstream sensor may be configured in other manners, and may be configured to be affected by leakage magnetic flux of the clutch.

Only the detection value of the upstream sensor may be corrected using the first correction value and the second correction value. Only the detection value of the downstream sensor may be corrected using the first correction value and the second correction value. For example, as in the embodiment described above, both the detection value of the upstream sensor and the detection value of the downstream sensor may be corrected using the first correction value and the second correction value. In this case, the first correction value for the upstream sensor may be different from or the same as the first correction value for the downstream sensor. The second correction value for the upstream sensor may be different from or the same as the second correction value for the downstream sensor.

The upstream sensor may be a torque sensor, a steering angle sensor, or a sensor that detects both a torque and a steering angle. The downstream sensor may be a torque sensor, a steering angle sensor, or a sensor that detects both a torque and a steering angle.

In the configurations of the embodiment described above, the steering apparatus may include other members. For example, the steering system may include a magnetic shielding plate that shields leakage magnetic flux of the clutch, a correction magnetic sensor that detects leakage magnetic flux of the clutch.

The invention is applicable not only to the steer-by-wire electric power steering system described above, but also to other steering systems including a clutch in a steering force transmission path.

## Claims

1. A steering system comprising:
a clutch that is disposed in a steering force transmission path between a steering wheel and steered wheels, and that mechanically disconnects the steering force transmission path when the clutch is energized, and mechanically connects the steering force transmission path when the clutch is de-energized;
an upstream sensor that detects at least one of a steering torque and a steering angle in the steering force transmission path between the steering wheel and the clutch; and
a downstream sensor that detects at least one of a steering torque and a steering angle in the steering force transmission path between the clutch and the steered wheels; wherein,
at least one of the upstream sensor and the downstream sensor detects an energization status of the clutch; and a detected value of at least one of the steering torque and the steering angle is corrected using a first correction value when the clutch is energized to mechanically disconnect the steering force transmission path, and the detected value of at least one of the steering torque and the steering angle is corrected using a second correction value different from the first correction value when the clutch is de-energized to mechanically connect the steering force transmission path.

2. The steering system according to claim 1, wherein:
the first correction value varies with temperature; and
the second correction value varies with temperature.

3. The steering system according to claim 1 or 2, wherein:
the first correction value and the second correction value vary with a relative position of the upstream sensor to the clutch when the first correction value and the second correction value are used in the upstream sensor; and
the first correction value and the second correction value vary with a relative position of the downstream sensor to the clutch when the first correction value and the second correction value are used in the downstream sensor.

4. A steering sensor system comprising:
a clutch energization detection circuit that detects whether a clutch disposed in a steering force transmission path between a steering wheel and steered wheels is energized or de-energized, the clutch mechanically disconnecting the steering force transmission path when the clutch is energized, and mechanically connecting the steering force transmission path when the clutch is de-energized;
a sensor that detects at least one of a steering torque and a steering angle in the steering force transmission path between the steering wheel and the clutch, or detects at least one of a steering torque and a steering angle in the steering force transmission path between the clutch and the steered wheels; and
a correction circuit that corrects a detected value of at least one of the steering torque and the steering angle using a first correction value when the clutch energization detection circuit detects that the clutch is energized to mechanically disconnect the steering force transmission path, and corrects the detected value of at least one of the steering torque and the steering angle using a second correction value different from the first correction value when the clutch energization detection circuit detects that the clutch is de-energized to mechanically connect the steering force transmission path.
